# EUROPEAN PATENT APPLICATION

(11) **EP 1 258 813 A2**
(43) Date of publication of application: **20.11.2002**
(21) Application number: 01123442.4
(22) Date of filing: 28.09.2001
(51) Int. Cl.: G06F 17/30

(54) **Patent information system**

(30) Priority: 10.05.2001 EP 01111447
(71) Applicant: Siemens Dematic AG, 90475 Nürnberg (DE)
(72) Inventor: Frers, Gerold, 85560 Ebersberg (DE)
(74) Representative: Berg, Peter, Dipl.-Ing.

(57) **Abstract**

A search engine (10) is set out which allows a user to access one or more databases for searching documents, wherein the search engine (10) provides assisting filters (22, 24, 26, 28), profiles (38) and related sub-profiles (40) to assist in limiting the search before actually executing search terms (84). Additional criteria may be placed on displaying (92) the search results and displaying select portions of documents (94). The documents may relate to intellectual property and include patents, trademarks, copyrights and the like.

## Description

The present invention relates to a search engine for identifying documents corresponding to a search topic or query. The documents may be located in one or several databases as well as other electronic storage media and correspond to themes relating to intellectual property. In addition, the present invention is directed to an interactive system that presents search options to a user, receives inquires from the user, performs searches based on the inquires, retrieves relevant documents and other data from databases and the like, and presents the data to the user.

Information retrieval systems or search engines in general are commonplace and necessary in navigating the numerous electronic information libraries and contents thereof and locate a desired document. Search engines obviate the requirement that the searcher or user learn complex computer languages, such as SQL (Structured Query Language) in order to effectively access and search a database. Rather, most search engines comprise computer code, with code segments directed to a variety of functions, intended on generating a user-friendly interface for entry of search terms and the like. Such entries are then converted into (for example) SQL commands and performed on a database. Results of the inquiry are then presented to the user in a user-friendly format courtesy of the search engine. Search engines facilitate access a number of databases for a plurality of remote users. The database entries include documents of variety of nature and content.

Many search engines are designed to provide all the search result hits without any concern to the content of the hits. It is then up to the user to discern the relevant material. Where the database content relates to a technically and/or legally complex field, such as intellectual property, many users will be at the mercy of data content without any technical or legal assistance. As a result, numerous searches will be prolonged and inaccurate. In addition to technical and legal assistance, it is often desired to perform a database search based on a specific component and/or legal standing of an entry. Current search engines operating key word searches, usually combinable with Boolean operators, are ineffective in addressing these needs. As such, a need exists for facilitating assisted database searching. Such need includes: provision of technical and legal guidance, searching limited according to database entry component, ranking of search results or hits, and the like.

The present invention is directed to a search engine having filters, profiles sub-profiles, and second sub-profiles all relating to select databases and entries therein. The entries may be intellectual property with the filters, profiles sub-profiles, and second sub-profiles all relating to technical and/or legal aspects thereof. Such entries may include patents, trademarks, copyrights, applications thereof, and other materials. The search engine may comprise numerous masks facilitating user friendly interactive entry of search terms, conditions and profiles as well as selective display of hits. The search engine may comprise a computer program having computer segments that operate in FULCRUM operating on an ORACLE database system. Likewise, the engine may use JavaScript to convert SQL commands into a user-friendlier interactive format. The search engine may also make use of browsers, such as Netscape, for an html language presentation thereby facilitating application over the Internet and closed networks. Programming of the present search engine is a matter of engineering known to skilled programmer armed with the instant disclosure. Other languages and operating systems may be employed as envisioned by the skilled programmer.

The search engine may be used as part of a system for accessing and searching a database, the system comprising a user interactive unit having communication capability with a network in which at least one database to be searched is operated. The interactive unit includes display means, information input means, processing and memory means. The network facilitates remote access to the databases via known server client architecture. An administrator may further be provided to regulate and maintain access to the network and databases in particular.

The present search engine may operate with natural language and/or search terms separated by Boolean algebra and other modifiers. The present invention comprises, an apparatus for providing information, comprising: a processor and memory which stores information controlled by the processor; and a search engine for enabling user access to at least one database comprising a plurality of entries, and retrieving none or at least one of said plurality of entries, said search engine stored in said memory and comprising: a code segment that creates a welcome mask having a plurality of user selectable fields, said fields limiting said user access to said at least one database; a code segment that creates a search mask related to one of said selectable fields and in response to user input, said first search mask comprising a plurality of user selectable profiles and subprofiles relating to an aspect of said entries, said subprofiles limiting said profiles; a code segment that searches said at least one database and retrieves at least one entry in accordance with at least one user selected profile and at least one user selected subprofile; and a code segment that makes said at least one retrieved entry available to said user.

The present invention also comprises a method for providing user access to at least one database storing a plurality of entries, said method facilitating user location and retrieval of at least one of said entries, comprising the steps of:
a. generating a first mask enabling user selection of one of a plurality of filters, said filters limiting said user access to said at least one database;
b. generating a search mask in response to a user selected filter, said search mask comprising a list of user selectable profiles and subprofiles relating to said entries, said subprofiles limiting said profiles;
c. searching said database in response to at least one user selected profile and at least one subprofile;
d. retrieving at least one database entry matching said at least one profile and at least one subprofile; and
e. presenting said at least one database entry to said user.

The invention is explained in greater detail below and by reference to exemplary embodiments shown in the drawings wherein like numerals refer to equivalent elements.
Fig. 1 depicts a welcome mask to the search engine;
Fig. 2 depicts a first search mask;
Fig. 2a depicts a word list pop up window;
Fig. 3 depicts a profile list pop up window;
Fig. 4 depicts a display list pop up window;
Fig. 5 depicts a hit list ranking pop up window;
Fig. 6a depicts a hit list;
Fig. 6b depicts a hit;
Fig. 6c depicts a comment pop up window;
Fig. 7 depicts a second search mask;
Fig. 8 depicts a third search mask; and
Fig. 9 depicts an ordering mask;

While the following discussion limits the search engine to a single database having content specific to patents, the present invention may be applied to a plurality of databases having content limited only by storage possibilities of the databases. In addition, the search engine is presented from the perspective of the assignee, Siemens, however, the user is not limited thereto.

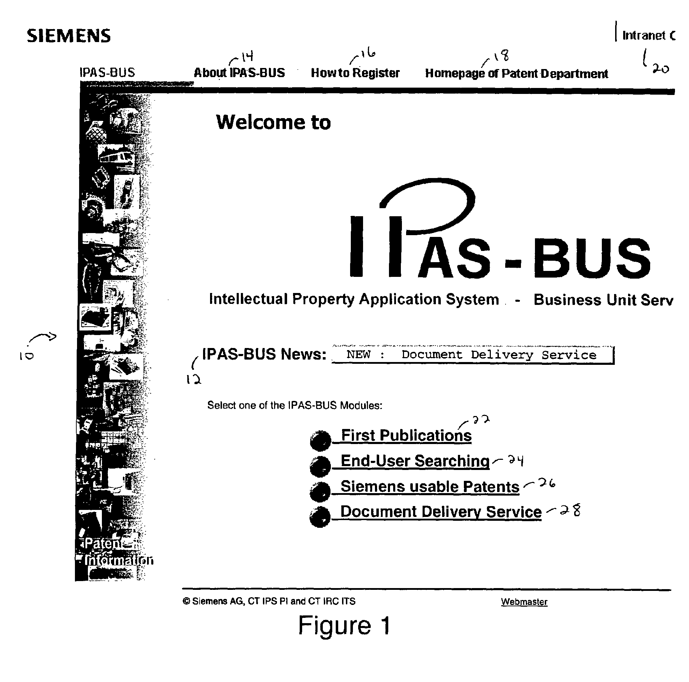

Figure 1 depicts a search engine welcome mask 10, which includes a scrolling bar 12 for presenting to the user information relating to the search engine. Several drop down menus are included herein to provide assistance to the user, including: information about the search engine 14; registration information 16; links to relevant pages 18; and a help menu 20. The operation of the menus are familiar to the ordinary computer user, while the content is particular to the search mask. Four database content filters are presented in mask 10, including: first publications 22; end-user searching 24; usable patents 26; and document delivery service 28. First publications 22 filters or limits database access to entries made within six months of the search execution. End-user searching 24 limits database access to all entries. Useable patents 26, limits use to patents available to the user without possibility of patent infringement by, in this embodiment, the assignee. Document Delivery Service 28 facilitates ordering a copy of a particular database entry. The number of filters is not limited to four and additional limitations on database access may be imposed as envisioned by the skilled artisan.

Access to the database is initiated by selecting a filter. Such selection is facilitated by clicking a circle icon 9 with a mouse pointer (not shown). Access to the database can be register and password protected via a pop up window (not shown). By this route, a user profile can be established and maintained so as to track search patterns, user needs, system abuses and the like.

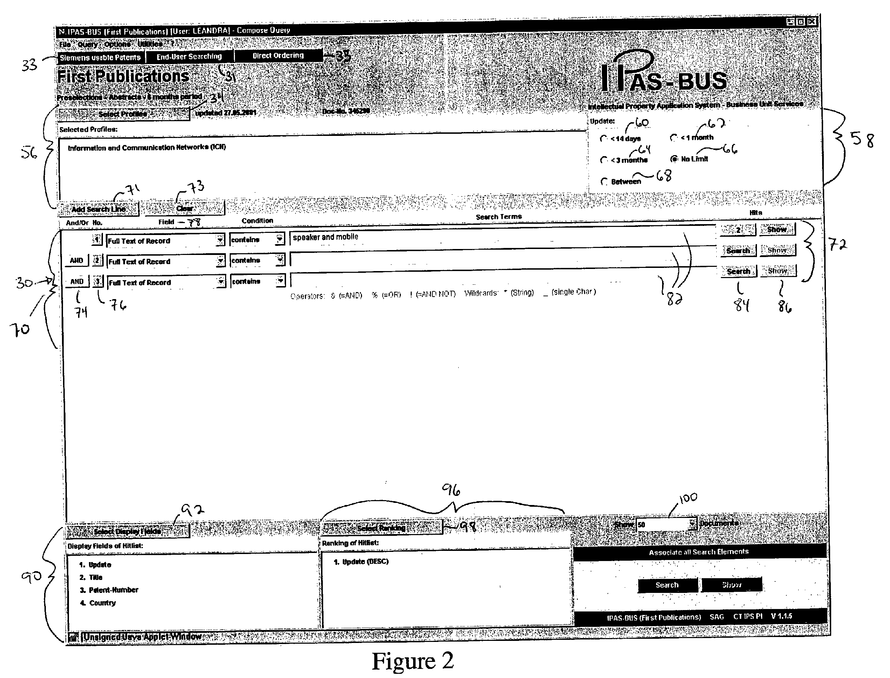

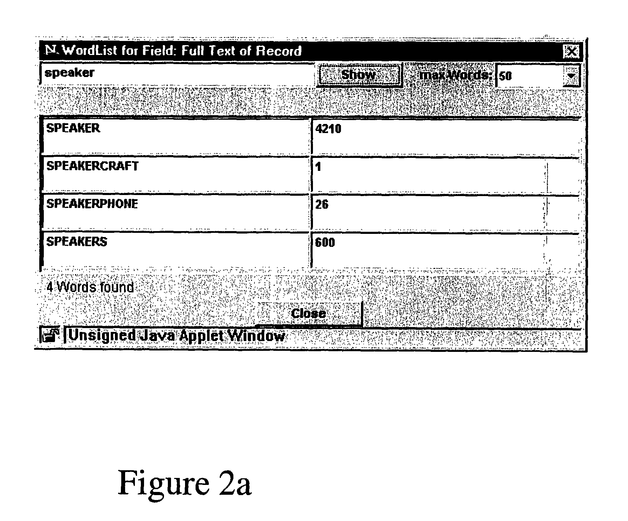

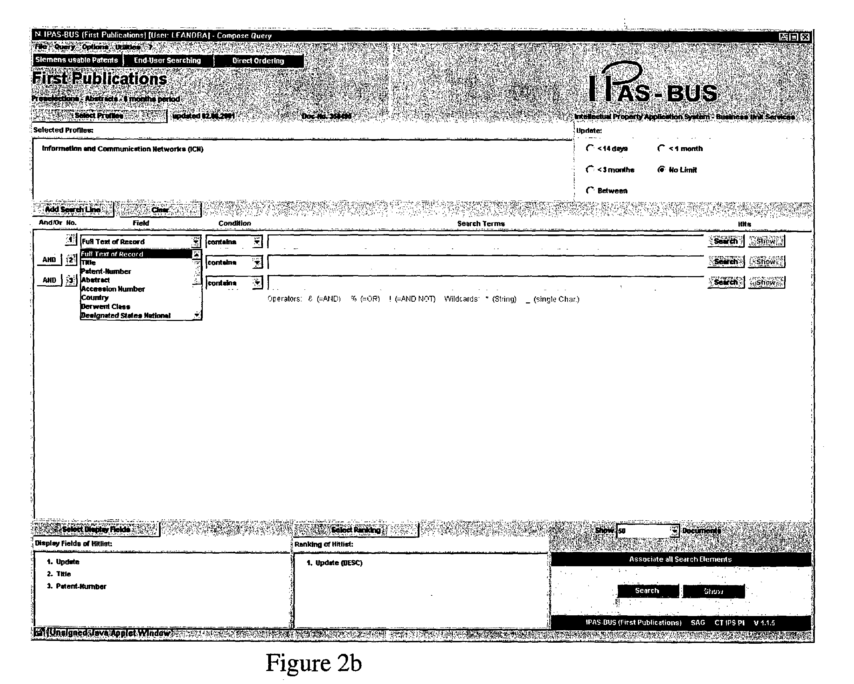

Figure 2 depicts a first search mask 30 associated with the first publications filter (22, Fig. 1). The search mask comprises 5 locations wherein the user may tailor and otherwise limit the scope of the search.

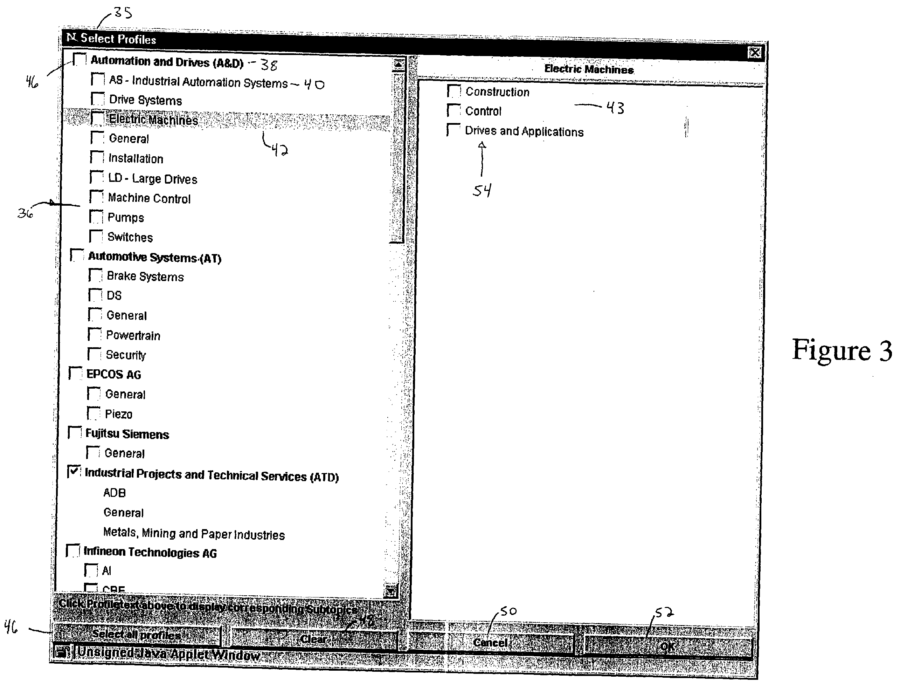

A first location 56 relates to profile selection. A profile is a descriptive term relating to the patent and in particular to the technology disclosed therein. Where other forms of intellectual property or other types of database entries are sought, the profiles are matched accordingly. When a select profile button 34 is engaged, a list of profiles 36 (Fig. 3) is caused to appear in a pop up window 35. The profile list is broken down into by profile 38, subprofile 40 and second subprofile 43. The second subprofiles modify the subprofiles which modify the profiles. The second subprofiles are presented in a list 54 on an other portion of pop up window 35. The other portion is activated when a subprofile is highlighted 42, normally by clicking thereon with a mouse pointer. The profiles, subprofiles and second subprofiles include an associated check box which is activated by a mouse click to indicate selection of the profile, subprofile and second subprofile. Selection of the profile automatically includes selection of all subprofiles listed therebelow. The same is applied to the subprofile with respect to the second subprofiles. The profile list is presented in a scroll down menu. Selection of all profiles is available through button 46. Clearing all selections is available through button 48. Canceling the pop up window and returning to the search mask 30 is available through button 50. Confirmation of selection is available through button 52. Titles of all selections appear in location 56 (Fig. 2).

Returning to figure 2, a second location 58 relates to when the data within the searched database was last updated. Patents go through several stages including publication of applications and the issued patent. As such, in a database tracking patents, duplicate and/or updated entries (to the extent the application and issued patent are the same) will be made. As the user may not desire duplicated efforts a data limitation may be imposed. Other needs for a date limitation include a search requirement for patents issued prior to a user invention disclosure date, thereby assisting the user in locating prior art, assessing the current state of the art, performing due diligence and others. The date restrictions include the past: 14 days (60); one month (62); three months (64); unlimited (66) and between select dates (68 - entry for which is provided with a pop up window, not shown).

A third location 70 relates to entry of search terms. Herein, a plurality of search lines 72 are provided wherein the user may type search terms, combinable with Boolean operators, as natural language or other entry systems known in the art. The search lines themselves (and terms therein) are combinable with Boolean operators via button 74. Additional search lines may be added via button 71 or cleared away to the initial state for entry of search terms via button 73. The search lines include associated numbered boxes (76), which when activated provide the user with options including deleting the search line, word list of possible search terms and the number of times such terms appear in the searchable documents (see figure 2a), and expansion of the search line to allow for entry of more search terms. Search fields 78 are presented in terms of a drop down menu. Search fields may limit the search to a field of the item search (herein patents). By way of example, the menu presents the user with the option to search patents: full text; title; patent number; abstract; accession number; classification; inventor; priority information; publication date; etc. (see Figure 2b). The search may be conducted for database entries that contain or do not contain the conditions of the search line, as may be accomplished by drop down menu 80.

Search terms are entered in box 82 and may be separated by Boolean operators, truncation, brackets, and so forth. After entry of terms, the number of possible hits for each search line may be independently viewed by clicking on the search button 84 associated with that line. The actual number of hits will appear as a numeral in the search box. To actually view the individual search results, the show button 86, associated with a search line and unilluminated until actual hits are present, may be activated with a mouse click. This will cause a pop up window to appear with a list of the hits associated with the conditions entered for the associated search line. For a combined search of all the search lines, search and show buttons 86 and 88 (respectively) are activated. The number of document hits may be selected by drop down menu 100.

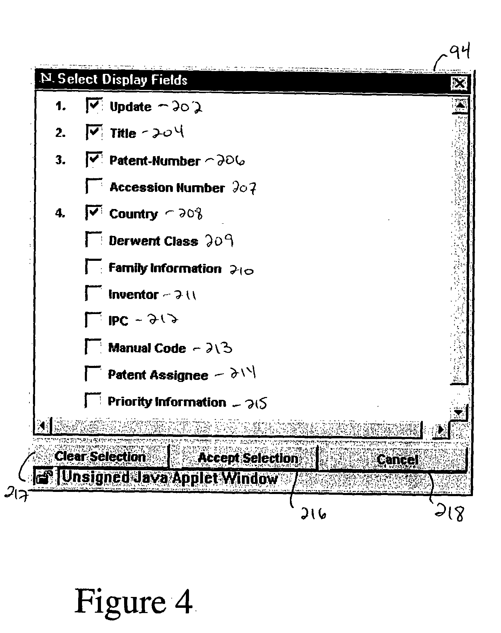

A fourth location 90 (figure 2) relates to various display fields for the hits. Activating the select display fields button 92 causes a pop up window' 94 (Fig. 4) to appear. Window 94 includes a plurality of display fields selectable via associated check boxes. The fields include: update 202, title 204, patent-number 206, accession number 207, country 208, Derwent Class 209, Family Information 210, Inventor 211, International Patent Code (IPC) 212, Manual Code 213, Patent Assignee 214, Priority Information 215, and Publication date. The aforementioned are based on the entry type, herein patents, and may be expanded to include other fields known to the skilled artisan. In figure 4, update, title, patent number and country were selected by checking the associated check boxes and activated the accept selection button 216. The selections may be cleared by activation of button 217 and the entire step canceled via button 218. The selected display fields will appear in location 90 as well as the hit list (discussed below).

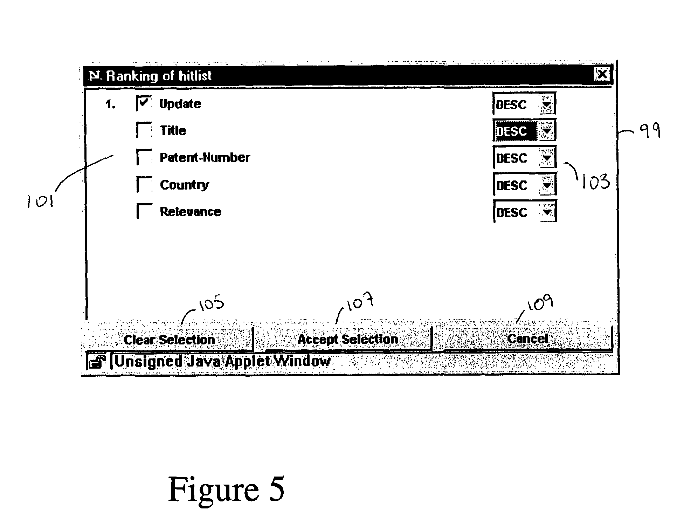

A fifth location 96 (figure 2) relates to various ranking criteria which may be implemented upon the hit list. Activation of ranking button 98 causes pop up window 99 (Fig. 5) to appear. In pop up window 99, the user may select various ranking criteria through clicking on associated check boxes. The listed criteria (101) includes update, title, patent number, country and relevance. A list of drop menus 103 is available to the user for sorting the hits in ascending or descending order. Finally, the user is afforded the possibility to clear selections 105, accept selection 107 and cancel (109) the pop up window. The rankings depend upon the document type and components thereof. The selected ranking criteria appear in location 96.

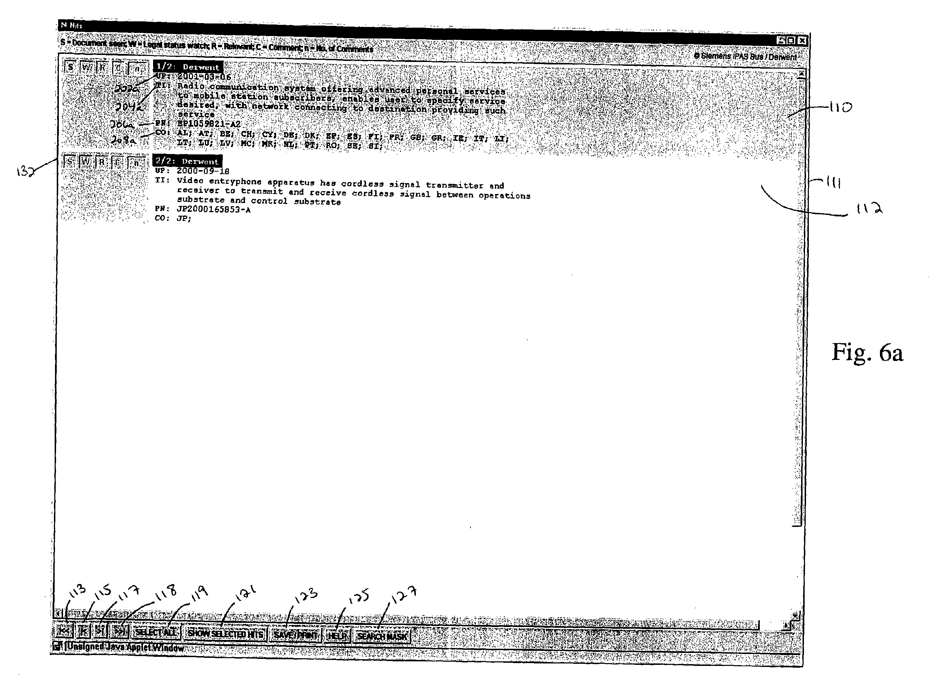

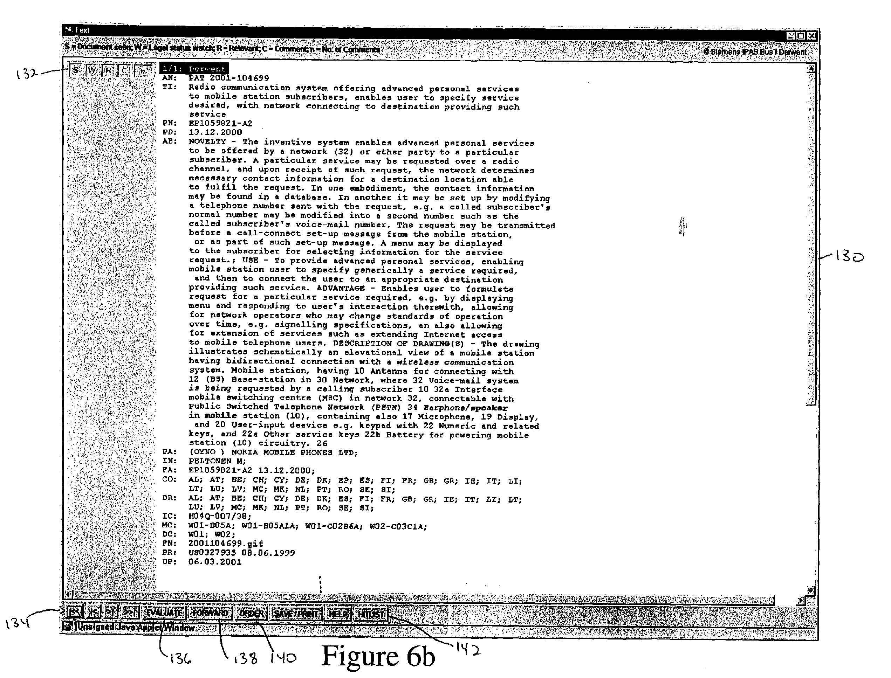

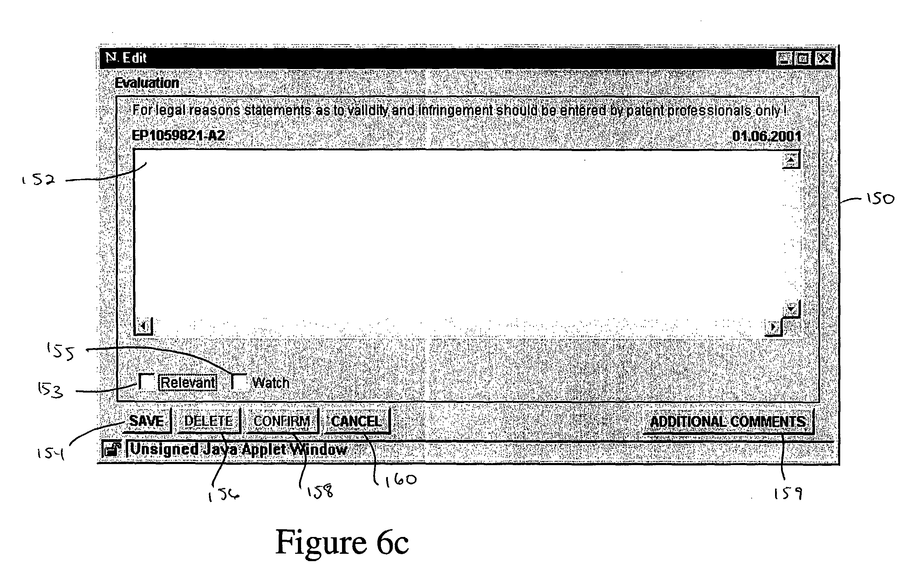

An example hit list is depicted in Figure 6a. Herein a database comprising Derwent Abstracts was searched using criteria depicted in Figure 2. The hit list was generated by clicking on button 86 and 88 (Fig. 2) which in turn caused pop up window 111 to appear. Herein, the selected display fields include: update 202, title, 204, patent number 206 and country 208. The hits display these fields over the abbreviations: UP (202a); TI (204a); PN (206a); and CO (208a) respectively. Hits are normally grouped in lists of 10 per page. In this window, the user is presented with several options along the bottom of the window, including: a go to the first page of hits button 113; go back one page button 115; go forward one page button 117; go to the last page button 118; select all hits for viewing 119; show displayed hits 121; save to local memory and print on local printer 123; help button 125; and a return to the search mask 127 (Fig. 2). The search depicted in figure 2, produced two hits 110 and 112. The first hit has been highlighted. Activation of button 121 causes pop up window 130 (figure 6b) to appear. Herein, the full text of the highlighted Derwent Abstract appears. Within windows 111 and 130, five boxes 132 appear indicating user history with respect to the associated document. The S box indicates that the document has been previously viewed by the user; the W box is a link by which the use may initiate a legal watch on the document. A legal watch refers to the steps in the maturation of an intellectual property application such as when a patent application issues, publishes, abandoned, etc; the R box facilitates user indication that the document is relevant; the C box facilitates insertion of comments by the user which will be associated with the displayed document; and the n box indicates the number of other comments by other users of the search engine as related to the displayed document. Returning to window 130, a series of buttons 134 appear along the button of the screen including several buttons depicted in window 111. Additional buttons include evaluate 136 for evaluating the depicted reference. Activation of this button causes pop up window 150 (Fig. 6c) to appear. Window 150 includes an area for entering comments (152) along with button activated options for saving (154), deleting (156), confirming (158) and canceling (160) the evaluation as well as viewing additional comments (159). Within this window, the user is given the option to indicate relevance of the document (check box 153) as well as initiate a legal watch (check box 155).

Returning to figure 6b, additional options presented to the user within window 130 include the option of forwarding the document to another (button 138); ordering the displayed document (button 140, via another pop-up window and the like); as well as returning to the hit list (button 142).

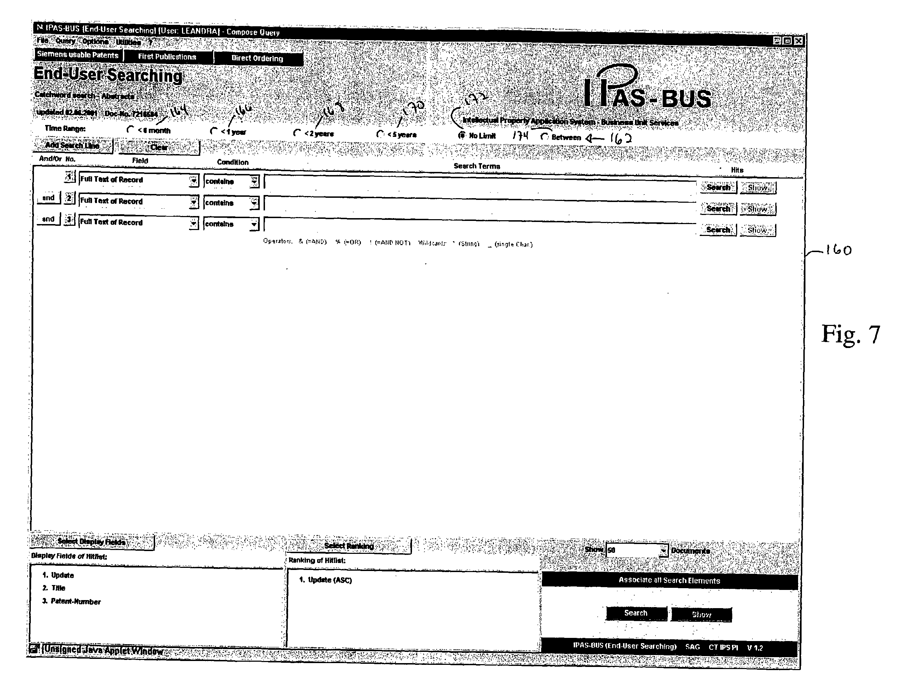

Other filters are available to the user as presented in the welcome page (figure 1) and within window 30. Activating button 31 causes the end user search mask 160 (figure 7) to appear. Herein, the user may search documents which have been entered in a database over a longer range of time than the first publication filter. Herein, the user is presented with a time range 162 which is longer than the time range available under the first publication filter. For example, the user may select, by activating a circular or radio button, a time range of: less than six months (164); less than one year (166); less than two years (168); less than five years (170); no limit (172); or between select dates (174) via another pop up window (not shown). Other information is also presented to the used including the last date of update (178), number of searchable documents (176); and catch word searching limited to a document abstract. The other options in this search mask are equivalent to the first publication search mask discussed above.

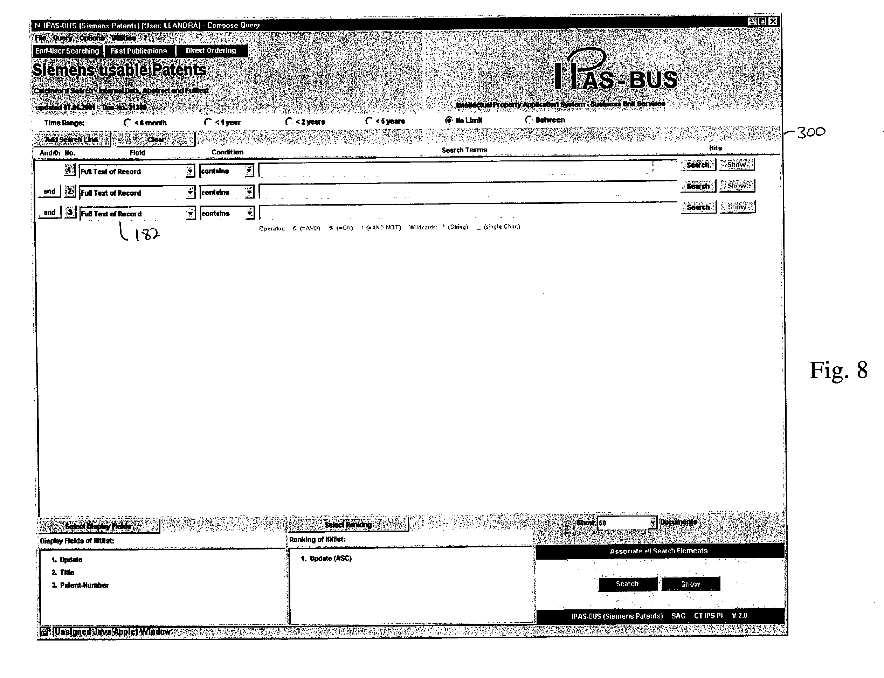

Activation of button 33 bring the Siemens usable filter search mask 300 up (Fig. 8). Herein same numerals refer to equivalent functions and elements. This search mask operates equivalently to the search masks described above, with the additional provision that this search mask can perform full text searches as referenced by numeral 182.

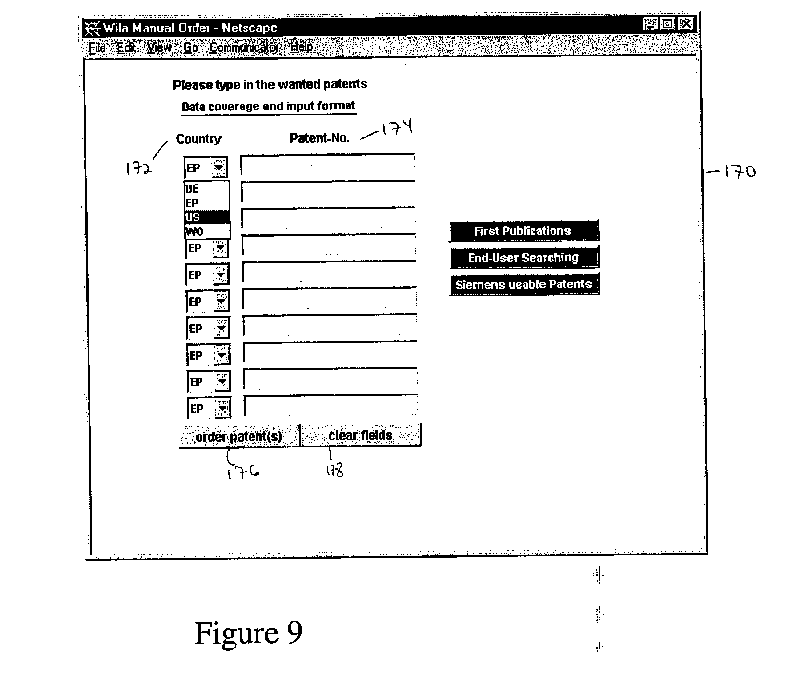

Activation of button 35 (Fig. 2) brings up direct ordering mask 170 (Fig. 9) facilitating ordering of a patent. Herein, the user may select a patent originating country or organization via drop menu 172, enter a patent number (174), and activate an on-line ordering and delivery of publication (via button 176) or clear entries (via button 178). The ordered patent may delivered: electronically, via post, or other means.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A method for providing user access to at least one database storing a plurality of entries, said method facilitating user location and retrieval of at least one of said entries, comprising the steps of:
a. generating a first mask (10) enabling user selection of one of a plurality of filters (22, 24, 26, 28), said filters limiting said user access to said at least one database;
b. generating a search mask (30) in response to a user selected filter, said search mask comprising a list of user selectable profiles (38) and subprofiles (40) relating to said entries, said subprofiles (40) limiting said profiles (38);
c. searching said database in response to at least one user selected profile and at least one subprofile (84);
d. presenting a result of said step of searching said database to said user (86).
e. retrieving at least one database entry matching said at least one profile and at least one subprofile; and
f. presenting said at least one database entry to said user (111).

2. The method according to claim 1, further comprising the steps of:
g. presenting said at least one database entry to said user; and
wherein said search mask (30) further enables user selection of at least one of a plurality of second subprofiles (43) from a second list (54), said second subprofiles (43) limiting said subprofiles (40) and said second list (54) generated in response to user inquiry (42).

3. The method according to claims 1-2, wherein said profiles (38), subprofiles (40), and second subprofiles (43) relate to at least one technical or legal feature of said entries.

4. The method according to claims 1-3, wherein said search mask (30) further comprises at least one search line (82) for receiving search terms, and further comprising the step of executing a search (84) of said database based on said search terms.

5. The method according to claim 4, wherein said search line (82) further comprises a word list comprising possible search terms and a number of times each of said possible search terms appear in said at least one database.

6. The method according to claims 4-5, wherein said search line (82) further comprises a search field list comprising possible search fields.

7. The method according to claims 1-6, wherein said search mask (30) further requests selection of at least one display profile (92) from a list of display profiles (94), said list of display profiles comprising components of said entries.

8. The method according to claims 1-7, wherein said search mask (30) enables user selection of at least one ranking profile (98) from a list of ranking profiles (99), said list of ranking profiles comprising components (101) of said entries.

9. The method according to claims 1-8, wherein said search mask (30) enables user selection of a date restriction (60, 62, 64, 66, 68) from a list of date restrictions (58), said list of date restrictions comprising a date of entry of said entries in said at least one database.

10. The method according to claims 1-10, further comprising means (150) for receiving user input (152), associating said input with at least one of said entries, and storing (154) said input for later retrieval.
